# EUROPEAN PATENT SPECIFICATION

(11) **EP 0 568 544 B1**
(45) Date of publication and mention of the grant of the patent: **04.02.1998**
(21) Application number: 92901160.9
(22) Date of filing: 27.11.1991
(51) Int. Cl.: B29C 47/06, B29C 49/04

(54) **MODULAR TUBULAR EXTRUSION HEAD AND A PROCESS FOR EXTRUDING TUBULAR ARTICLES**
EXTRUSIONSKOPF IN MODULBAUWEISE FUER ROHRE UND VERFAHREN ZUM EXTRUDIEREN ROHRFOERMIGER GEGENSTAENDE
TETES D'EXTRUSION TUBULAIRE ET MODULAIRE, ET PROCEDE D'EXTRUSION D'ARTICLES TUBULAIRES

(43) Date of publication of application: 10.11.1993
(73) Proprietor: GENERAL ELECTRIC COMPANY, Schenectady, NY 12345 (US)
(72) Inventor: COYLE, Dennis, Joseph, Clifton Park, NY 12065 (US); TEUTSCH, Erich, Otto, Pittsfield, MA 01201 (US)
(74) Representative: Goode, Ian Roy
(86) International application number: US9108985
(87) International publication number: WO9310956

(56) References cited:
- EP-A- 0 215 337
- EP-A- 0 274 095
- US-A- 4 522 775
- US-A- 4 649 004

## Description

The invention relates to resin extrusion apparatus and particularly to extrusion heads for producing articles with one or more tubular layers such as parisons, wire coatings, blown films, pipes, pultruded rods, profiles, reinforced sheets, etc.

Parisons, tubular extrusions of plastic resin which are subsequently blow molded to form bottles or other containers, are formed in the prior art by various apparatus some including extrusion heads which extrude successive layers of plastic resin onto a mandrel. A typical multilayer parison extrusion head has separate inlets for receiving heated and plasticized resin from individual screw extruders and has separate channels for distributing and expressing the respective plastic resins in successive layers on the mandrel. Each channel includes an annular equalization and distribution chamber surrounding and spaced from the mandrel for receiving the plastic resin from the corresponding inlet. From the equalization chamber the plastic resin is fed though a frustoconical transfer passage downward and inward to a tubular extrusion channel formed around the mandrel. This annular extrusion channel exits through an inwardly or outwardly flaring annular die which includes a conical core member which may be moved longitudinally relative to the outer member of the die to vary the thickness of the wall of the extruded tubular article.

One particularly useful and successful extrusion head for forming tubular articles such as parisons is disclosed in U.S. Patent No. 4,798,526. This head includes one or more individual annular extrusion modules surrounding respective successive portions of a stepped or tapered mandrel to form the annular extrusion channel which receives one or more successively extruded plastic resin layers from the modules. Each module has a pair of members with mating surfaces wherein the equalization and distribution chamber and the frustoconical transfer passage are formed. Having the head formed from individual coaxially spaced extrusion modules enables the head to be readily assembled and disassembled as well as enabling the assembly of an extrusion head with varying numbers of modules so that a module can be used in one assembled head to extrude a single layer tubular article or can be used in a differently assembled head to extrude any layer of a multilayer article. The modules forming an extrusion head can be positioned in any desired order. Furthermore, the die modules are separated from each other by annular air spaces. Concentric tubular necks or collars extend from each module into engagement with an adjacent module to define the separation distance or the width of the air spaces between modules. These air spaces prevent heat transfer from a high temperature module to an adjacent low temperature module. Low temperature resins can be degraded if heated to the higher temperature. This patent further discloses polymer inlet pressures at the extrusion head of 4,000 to 6,000 psi (27,000 to 41,000 KPa) for polycarbonate, 2,500 to 4,000 psi (17,000 to 28,000 KPa) for polypropylene, and 2,000 to 3,000 psi (13,000 to 21,000 KPa) for tie resins and barrier resins.

U.S. Patents No. 3,649,143, No. 4,111,630 and No. 4,182,603 disclose tubular extrusion dies for blow molding of multi-ply films and having nested frustoconical, hemispherical and cylindrical die members forming polymer distribution chambers wherein spiral and helical grooves are formed on the outer surfaces of inner members. These grooves progress from points near or at the inlets toward the outlets with decreasing depth so that the polymer flow is gradually forced out of the grooves and into the frustoconical, hemispherical or tubular space between die members to evenly distribute the polymer around the chamber. These nested arrangements have several deficiencies such as limiting any temperature differential between the different layers being extruded, requiring larger heads for extruding greater numbers of layers, and having long conical passages from the end of the groove or grooves to the annular outlet.

Generally the prior art tubular extrusion apparatus requires a restrictive frustoconical transfer passage from the distribution chamber to the annular outlet from which the tubular article is extruded. This restrictive passage provides a relatively large pressure drop, i.e., greater than 50% of the total pressure drop from the extrusion head inlet through the distribution region or chamber and the restrictive passage to the outlet, in order to assist in even distribution of the polymer in the distribution chamber. In the absence of the restrictive outlet passage with the relatively large pressure drop, the polymer tends to flow at a greater rate along the shortest path between the inlet to the distribution chamber and the closest region of the annular outlet producing unevenness in the thickness of the tubular article about its circumference.

While the prior art apparatus is generally efficient and successful in the extrusion of tubular articles such as multilayer parisons, blown films, wire coatings, etc., there is room for improvement. In addition to the pressure differential problems discussed above, the stresses caused by temperature differentials need to be reduced. For instance, polymer melt in prior art extrusion heads flow from the inlet side of an equalization and distribution chamber to the opposite side. As a result, resins processed in prior art extrusion heads are subjected to temperature differentials, as well as subjected to the above-described pressure differentials, as the resin is processed through the inlet, the distribution means, and outlet. As a result of these processing differentials, the resin extrudate will deposit in a non-homogeneous distribution, thereby creating actual and latent internal stresses in the extruded parison. Then when the parison is formed into a final shape of a bottle or similar container, such internal stresses will be carried forward, and perhaps in some instances even exacerbated, in the final product. For instance, if the bottle or like article is to be reused and subjected to high temperature cleaning or the like and filled under pressure, e.g., with carbonated beverage, the article may explode as a result of such internal stresses. Given that prior extrusion apparatus are likely unable to alleviate these stresses there is a need to further improve extrusion heads. This is especially so in light of environmental demands which require reuse of containers rather than their disposal in landfills or the like.

US-A-4522775 discloses a multi-layer laminate structure comprising a separate layer of scrap produced from the several thermoplastic resins used in making the laminate structure. In a preferred construction, the multi-layer laminate structure comprises an outer thermoplastic polyolefin layer, an inner thermoplastic polyolefin layer and an intermediate oxygen barrier layer preferably made of ethylene-vinyl alcohol copolymer. An adhesive layer bonds the barrier layer to the inner polyolefin layer and a separate scrap layer is disposed interiorly of the outer polyolefin layer. A second adhesive layer bonds the scrap layer to the intermediate barrier layer.

An object of the present invention is to construct a new and improved polymer extrusion head and process for tubular extrusions which minimize processing differentials that occur in prior art extrusion heads and processes and thereby resulting in a more homogenous distribution of polymer as it is extruded.

It is also an object of the invention to provide a container having superior properties as a result of the improved polymer distribution described above, and to thereby provide a container having sufficient properties to be effectively and safely reused or reclaimed.

According to the invention there is provided a polymer resin extrusion head having the features recited in claim 1.

In another aspect, the invention is polymer resin extrusion head for extruding multilayer tubular articles comprising
an elongate mandrel;
a plurality of coaxial annular extrusion modules spaced longitudinally along the mandrel and extending around successive sections of a mandrel so as to define a tubular extrusion channel between the modules and the mandrel for receiving successive layers extruded by the modules into the tubular extrusion channel;
an annular die mounted downstream from the extrusion modules and having three successive sections for receiving and forming the multilayered tubular extrusion from extrusion channel, the first section having a tapered diameter progressively reduced from the diameter of the annular extrusion channel, the second section having a constant diameter equal to the exit diameter of the first section throughout its length, and the third section having a flared diameter progressively increasing the diameter from the diameter of the second section to a desired diameter.

Other objects, advantages and features of the invention will be apparent from the following description of the preferred embodiment taken in conjunction with the accompanying drawings.

The invention will now be described by way of example with reference to the accompanying drawings in which:-
Fig. 1 is a section view of an extrusion head for a extruding a multilayer parison in accordance with the invention.
Fig. 2 is a bottom view of an upper member of one extrusion module in the head of Fig. 1.
Fig. 3 is a sectional view, taken at line 3-3 of Fig. 2, of an extrusion module removed from the head of Fig. 1.
Fig. 4 is a sectional view, taken at line 4-4 of Fig. 2, of a portion broken away from the module of Fig. 3.
Fig. 5 is an elevational view, partially in section, of a broken away portion of an upper member of the module of Fig. 3 with the section taken at line 5,6 - 5,6 of Fig. 2.
Fig. 6 is an elevational sectional view of a broken away portion of a lower member of the module of Fig. 3 with the section taken at line 5,6 - 5,6 of Fig. 2.
Fig. 7 is a diagrammatic view of a parison extrusion apparatus including the extrusion head of Fig. 1.
Fig. 8 is a view similar to Fig. 2 showing a variation of the spiral channel in the upper member of the extrusion module.
Fig. 9 is a view similar to Figs. 2 and 6 showing another variation of the spiral channel in the upper member of the extrusion module.
Fig. 10 is a schematic illustration of a container blow molding process and apparatus which can incorporate an extrusion head according to this invention.
Fig. 11 is a partial view in cross section of an annular die according to the invention.

### DESCRIPTION OF THE PREFERRED EMBODIMENT

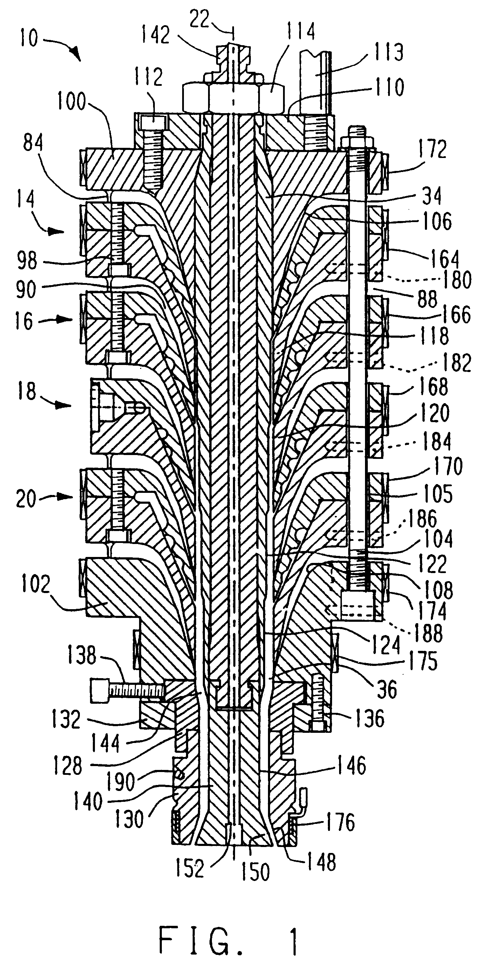

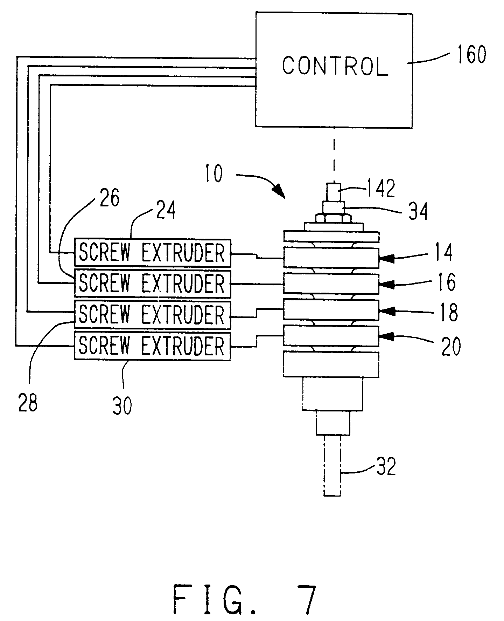

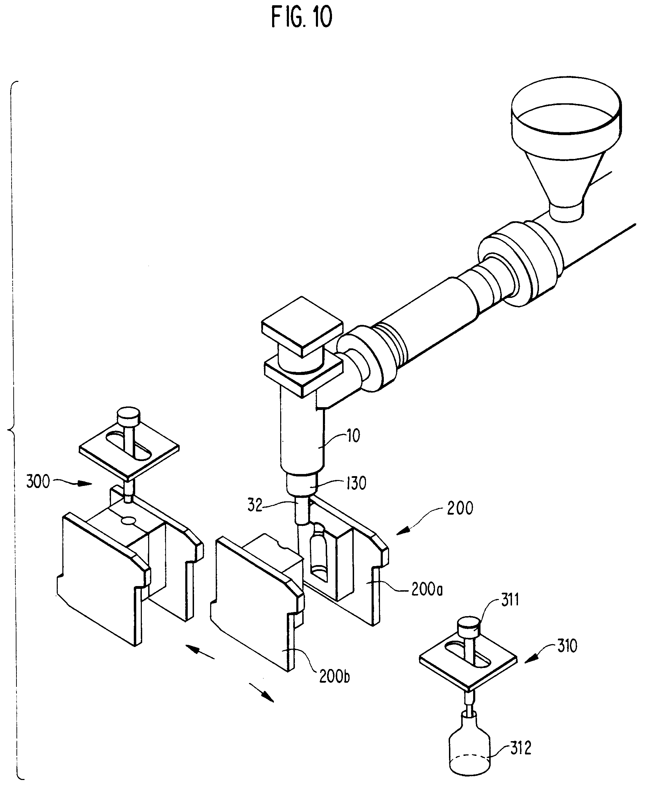

As shown in Fig. 7, one embodiment of an extrusion head, indicated generally at 10, in accordance with the invention includes one or more extrusion modules such as a plurality of extrusion modules indicated generally at 14, 16, 18 and 20 which receive streams of different polymer materials from respective conventional screw extruders 24, 26, 28, and 30 for forming a multilayer parison 32 which is then extruded into a container blow mold as illustrated in Fig. 10. As shown in Fig. 1, the modules 14, 16, 18 and 20 are coaxially mounted in spaced relationship along the axis 22 of the modules so as to form air spaces 88 including frustoconical air spaces 90 thermally isolating each module in the head to enable improved extrusion temperature control of each layer being extruded.

In the illustrated parison head, the modules 14, 16, 18 and 20 coaxially extend over spaced sections of a tapered stepped mandrel 34 so as to extrude their respective layers into a tubular extrusion channel 36 defined between the inner surfaces of the modules and the outer surface of the mandrel.

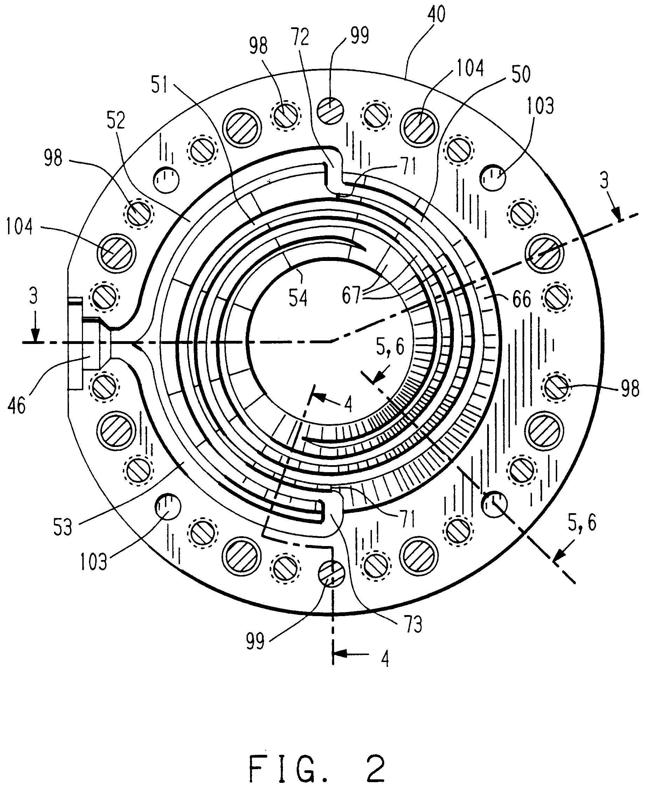

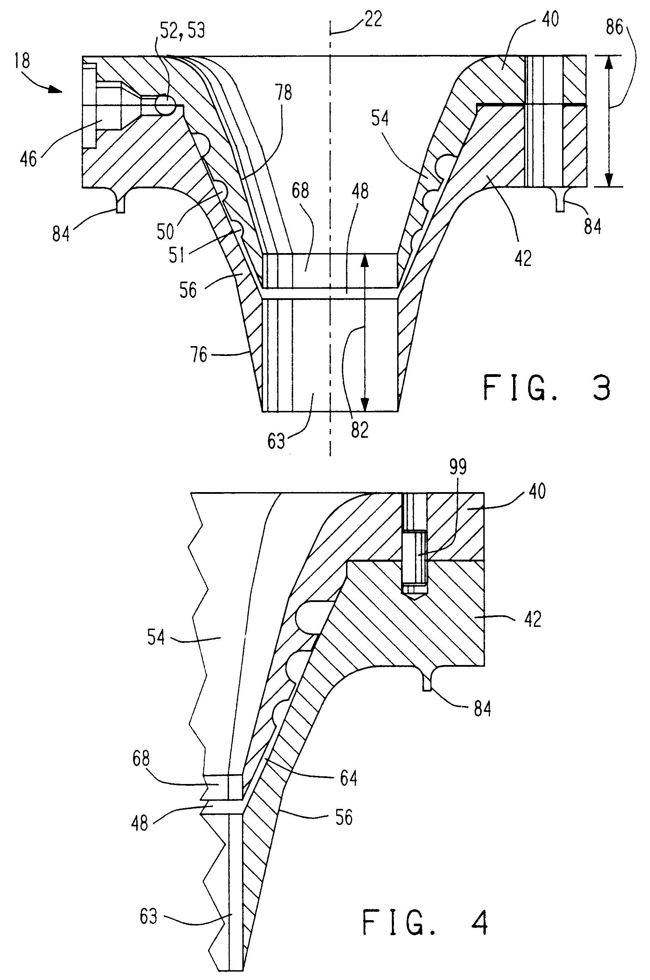

The modules 14, 16, 18 and 20 have substantially similar constructions. As shown in Fig. 3 for the module 18, each of the modules includes upper and lower members 40 and 42 which mote together and include a plastic material inlet 46 opening on the periphery of the module, an annular outlet 48 opening at the inner surface of the module, and one or more spiral channels such as a pair of spiral channels 50 and 51, Figs. 2 and 3, extending from bifurcated inlet channels 52 and 53 to a position adjacent to the outlet 48. The inlet 46 is formed by machining the mating surfaces of the members or by boring along the parting line between the outer portions of the members. Alternatively, the inlet 46 can be formed by boring in one of the members 40 or 42 similar to that shown in U.S. Patent 4,798,526. The inlet bifurcated channels 52 and 53 are machined in opposite directions through ninety degree arcs in the mating surfaces of the outer flange portions of the members 40 and 42. The mating flat or land surfaces of the flange portions of the members 40 and 42 sealingly engage each other to close the channels 52 and 53.

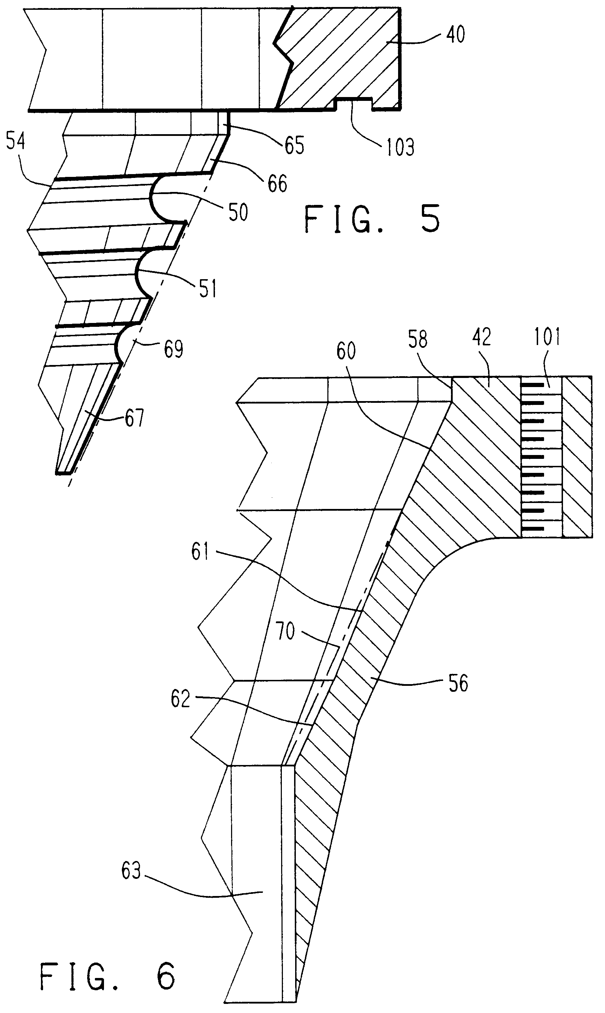

Center portions 54 and 56 of the members 40 and 42 are generally frustoconical with apexes extending downstream. As shown in Fig. 6, the inside surface of the center portion 56 has a cylindrical ring portion 58 and three successive frustoconical portions 60, 61 and 62 which extend inward from the ring portion 58 to the cylindrical surface 63 of a bore which defines a portion of the outer wall of the tubular extrusion channel 36, Fig. 1. The slant angle of the surface 61, i.e., the angle of the surface 61 relative to the axis 22, is less than the slant angle of the surfaces 60 and 62 so that the thickness of an annular frustoconical space or passage 64, Fig. 4, between the portions 54 and 56 gradually increases over the region of the spiral channels 50 and 51, as illustrated by the short and long dashed line 70 which has the same angle as surfaces 60 and 62. As shown in Fig. 5, the outside surface of the inner frustoconical portion 54 has a cylindrical ring portion 65 sealingly engaging the surface 58, a first frustoconical surface portion 66 extending inward from the ring portion 65 to the first convolution of the spiral channels 50 and 51, and a second frustoconical surface portion 67 extending inward from the outermost spiral convolution formed by channels 50 and 51 to the apex of the frustoconical portion 54 where a cylindrical surface 68 of above, Fig. 4, defines a portion of the outer wall of the tubular extrusion channel 36. The bores defining cylindrical surfaces 63 and 68 are coaxial. Edges 71, Fig. 2, between the first and second frustoconical surfaces 66 and 67 are formed in the land areas between the first convolutions of the spiral channels 50 and 51. The first frustoconical surface portion 66 has a slant angle equal to surface 60 so that surface portion 66 sealingly engages the surface portion 60. The second frustoconical surface portion 67 also has the same slant angle as surfaces 60 and 66 but has a reduced diameter, as illustrated by the long and short dashed line 69 which is an extension of the surface 66, so as to introduce an initial frustoconical space or thickness between the surface 61 and the land areas separating the spiral channels 50 and 51 to begin the frustoconical passage 64. At its inner end the frustoconical passage 64 defines the outlet 48.

Referring to Fig. 2, the inlet channels 52 and 53 have extensions 72 and 73 machined in the surfaces 65 and 66 of the inner center portion 54 to open into the origins of the respective spiral channels 50 and 51. these origins are on opposite sides, 180° apart. The spiral channels 50 and 51 are formed by machining the frustoconical surface 67 of the inner frustoconical portion 54 and each extend clockwise for approximately one and one-half convolutions about the frustoconical portion 54. The cross-sectional area of each channel 50 and 51 gradually decreases from its origin to its endpoint so that the polymer forced into each channel at its origin is gradually dispersed into the increasing width of the frustoconical passage 64 to distribute the polymer evenly about the frustoconical portion 54. The pitch of the spiral channels, i.e., the spacing between adjacent convolutions, is constant and the depth of the spiral channels relative to surface 67 changes linearly so as to facilitate the machining of the channels.

The length of the spiral channels must together circumscribe or extend symmetrically around the longitudinal axis of the extrusion module or modules, i.e., extend substantially 360° around the axis of the bore which the mating inner and outer portions create to form extrusion channel 36, so as to subject all of the polymer flowing from the inlet to the outlet to substantially the same process conditions. "Circumscribe," as used herein, is meant to include circular as well as non-circular paths. Such channels provide a means whereby the polymer is distributed at the annular extrusion outlet with properties which are substantially symmetrical around the axis of the extrusion module or modules for all resin which is distributed through the outlet.

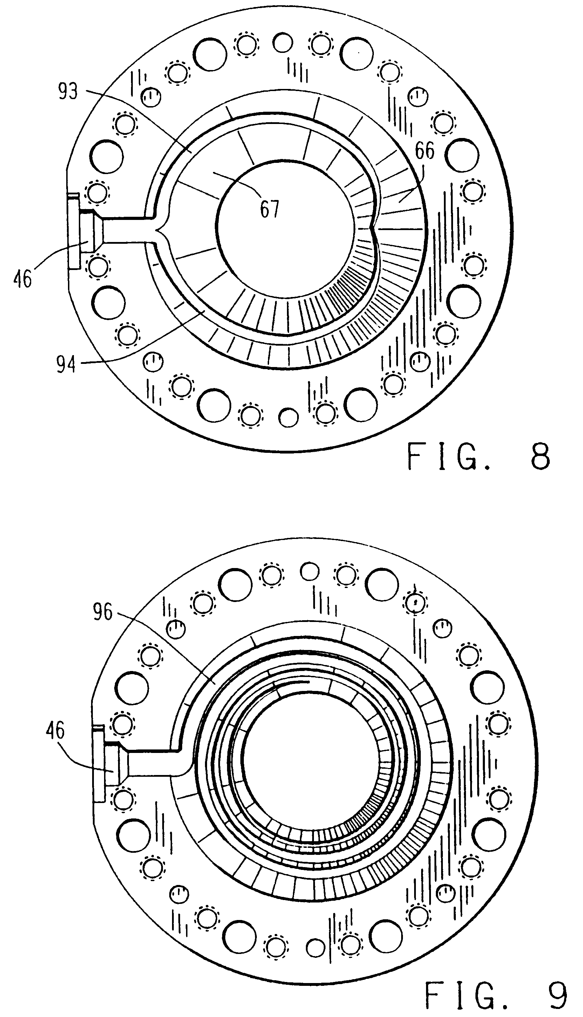

In the modification shown in Fig. 8, channels 93 and 94 extend in opposite directions each through a minimum of 180° along spiral paths so that the channels 93 and 94 together extend completely around the inner frustoconical portion. The numbers of spiral channels and their direction can vary. The modification of Fig. 9 illustrates a single spiral channel 96 which makes more than three full convolutions around the inner frustoconical portion.

Referring back to Fig. 3, the outside surface 76 of the lower portion of the lower frustoconical portion 56 has a slant angle which is less than the slant angle of the inside surface 78 of the upper frustoconical portion 54 so that the width 82 of the inside surface of the module 18 along the axis 22 is greater than the width 86 of the outer portions of the module 18. The difference between the widths 82 and 86 is selected to provide the desired spacing 88, Fig. 1, between adjacent modules. The lower edge of the apex of each higher module 14, 16 and 18 engages the upper side of the next lower module 16, 18 and 20 to define the spacing 88 between modules. Spacers 84 formed on the bottom of the flanges of the lower members 42 abut the adjacent modules to assist in maintaining even spacing between the flanges or outer portions of the modules around their circumference. These spacers 84 are broken by the various bores into the flange so as to permit air flow into and out of the spaces 88. The frustoconical air space portions 90 of the spaces 88 extend to the points of engagement between modules.

Bolts 98, Figs. 1 and 2, secure the upper and lower members 40 and 42 of the extrusion modules 14, 16, 18 and 20 together. Guide pins 99, Figs. 2 and 4, provide for proper alignment of the members 40 and 42 during assembly. Threaded bores 101, Fig. 6, in the members 42 are aligned with recesses 103, Figs. 2 and 5, in the members 40 so that conventional jacking bolts (not shown) can be screwed into the bores 101 to engage the recesses and force the members 40 and 42 apart during disassembly.

As shown in Fig. 1, the modules 14, 16, 18 and 20 are held in the extrusion head 10 by upper and lower clamp members 100 and 102 and by bolts 104, see also Fig. 2, which extend through bores in the clamp members and the extrusion modules. The lower surface 106 of the upper clamp member 100 has a convex frustoconical configuration similar to the lower surface of the extrusion modules 14, 16, 18 and 20, and the upper surface 108 of the lower clamp member 102 has a concave frustoconical configuration similar to the upper surface of the extrusion modules. This enables extrusion modules to be interchanged in position as well as the clamp members to be used to hold a single extrusion module or any number of modules.

The mandrel 34 is tubular and extends through the upper clamp member and a mounting plate 110 fastened by bolts 112 to the upper clamp member 100. Bolts 113 secure the mounting plate 110 to conventional blow molding and supporting structures (not shown). A threaded nut 114 secures the upper end of the mandrel which has a tapered fit in the clamp member 100. The mandrel 34 is tapered downward with by a plurality of successive steps 118, 120, 122 and 124 which begin at each corresponding outlet of the modules 14, 16, 18 and 20 to provide for the extrusion of the successive polymer layers on the mandrel. The diameters of each step are selected in accordance with the desired thickness of the corresponding layer being extruded. Generally different mandrels are required for different arrangements of extrusion modules.

Alternatively, the mandrel can have a constant diameter through the extrusion modules and the inner diameters of the extrusion modules can be stepped. This limits the interchangeability of the modules, but blank modules can be manufactured with the inner diameters machined later after the extrusion head configuration is determined.

Annular upper and lower dies 128 and 130 are mounted by a die clamp 132 and bolts 136 and 138 on the bottom of the module clamp member 102. The lower die 130 is threaded to the upper die 128. Positioned within the dies is a die core 140 which is threaded onto the lower end of a shaft 142 slidably extending through the lumen of the mandrel 34. The die 128 has its die opening tapered or stepped down in diameter at 144 in correspondence to the tapered terminal end of the mandrel 34 so that a constant cross-sectional area of the extrusion passage is maintained. This reduced diameter extends along a section 146 of constant diameter through the upper portion of the lower die 130 with the bottom portion 148 of the lower die flaring out to the desired diameter of the article or parison. The bottom portion 150 of the die core 140 flares outwardly at an angle slightly greater than the angle of the die portion 148 so that the exit thickness of the annular extrusion channel is less than the upper portion of the extrusion channel to insure that the layers of plastic polymer are firmly bonded together and that the cross-sectional area of the extrusion passage is maintained.

In order to assure that the polymer layers are preferably radially compressed to some degree upon being extruded from the die, the cross-sectional area of the annular channel at the exit from the bottom of the die portions 148 and 150 is slightly less than the cross-sectional area at the entrance portion of the channel. In other words, the extruded multi-layer polymer structure is preferably compressed slightly by reason of the reduction in the cross-sectional area of the flow passage formed by the channel formed by the elements 148 and 150 in the direction of the exit therefrom. This assures compression of the multi-layer structure as it exits from the die and provides firm bonding and enhanced structural integrity of the extruded multi-layer parison.

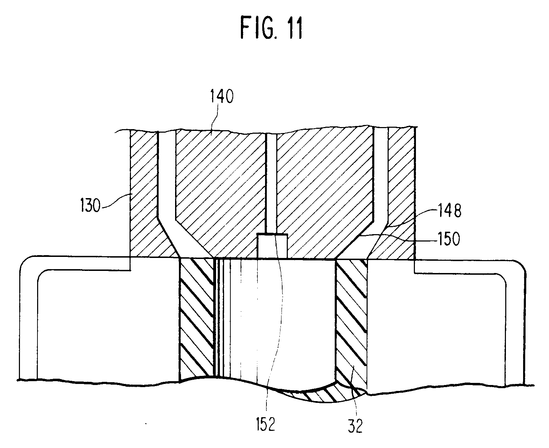

As illustrated in Fig. 11 the bottom portion 150 of the die core 140 can alternatively flare inwardly at an angle greater than the angle of the die portion 148. As a result the die is inwardly tapered, but has an expanding extrusion channel annulus. In the embodiment of Fig. 11, the same contraction in cross-sectional area of the annular flow passage is preferably provided in order to compress the extruded multi-layer structure as it exits the die.

A center longitudinal bore 152 is formed through the die core 140 and the shaft 142 for passing gas into the parison being extruded to prevent collapse of the parison.

The extrudate exits the above-described die into a container blow mold according to conventional techniques. As illustrated in Fig. 10 parison 32 exits into a container blow mold 200. Container blow mold 200 can be a conventional split mold which is divided into halves 200a and 200b along its longitudinal axis and has a shape selected for the particular container desired. The extruded parison 32 is then processed according to conventional blow molding techniques. See, for example, "Blow Molding", Modern Plastics, October 1991, pp. 222-224.

For example, after parison 32 exits into container blow mold 200 halves 200a and 200b of the mold come together, thereby pinching the bottom of parison 32 to form a seal. The sealed bottom of the parison will become the bottom of the finished container. Shortly after the bottom of the parison is pinched, a conventional cutting blade (not shown) severs the parison from the extrudate exiting the annular die 130. The container blow mold 200 is then removed from under annular die 130 and replaced with another mold 300 to repeat the process described above. This particular process is known as a single-station shuttle process.

After the container blow mold is removed from under extrusion head 10, container blow mold 200 is shuttled to calibration station 310. A blow pin 311 is then inserted into container blow mold 200 and parison 32 to inflate the parison into a container schematically illustrated as 312 in figure 10. Container blow mold 200 is not illustrated at calibration station 310 in order to better illustate container 312. The blown container 312 is then separated from mold 200 and trimmed using standard techniques.

As shown in Fig. 7, the illustrated parison extrusion apparatus includes a conventional control 160 which controls the vertical position of the shaft 142 in the mandrel 34. Parisons being extruded are often varied in thickness from the bottom to the top; i.e., bottle bottom portions having inverted bottoms need thicker walls at the bottom to prevent bulging of the bottoms from the pressure of the bottle contents such as a carbonated beverage. Additionally the control 160 can vary the extrusion pressures of the extruders 24, 26, 28 and 30 to vary the thickness of each layer being extruded relative to the other layers in a conventional manner. For example, the thickness of a barrier layer can be maintained uniform throughout the bottle height while the thickness of a structural layer is reduced in upper portions of the bottle.

Referring back to Fig. 1, electrical heater coils 164, 166, 168, 170, 172, 174, 175 and 176 are mounted on the extrusion modules 14, 16, 18 and 20, the clamp members 100 and 102 and the lower die member 130, respectively, for initially heating the corresponding members to their desired operating temperatures as well as maintaining a proper temperature during operation. Thermocouple sensing elements 180, 182, 184, 186, 188 and 190 provide temperature signals of the extrusion modules 14, 16, 18 and 20, the lower clamp 102, and the die member 130 to conventional control circuitry (not shown) operating the heater coils.

In an example of a parison suitable for blow molding to form a bottle, the parison is formed by extruding inner and outer layers of polycarbonate, and intermediate layers of amorphous polyamide and regrind through multiple extrusion modules. However, there may be instances where a single material has properties which meet all of the requirements of a particular container application. In those instances, parisons having only one layer are needed. Accordingly, those single-layered parisons can also be prepared into single-layered containers according to the invention wherein only one extrusion module would be used.

The described embodiment has several advantages over the prior art extrusion apparatus. The spiral channel or channels forming together at least one full convolution gradually opening into the frustoconical passage 64 results in pressure differentials in the channel or channels being cancelled by pressure differentials in the thinner upper portions of the frustoconical passage 64. This eliminates the need for an annular pressure equalization and distribution chamber which is generally required in prior art tubular article extrusion apparatus. Such equalization and distribution chambers still have some unequal pressure, i.e., there must be a pressure differential to produce plastic polymer flow from one side to the other side of the annular chamber. The uneven pressure around the annular outlet produces uneven thicknesses in the layers being formed in the parison. Thus the embodiments of Figs. 1-9 produce superior circumferential layer thickness uniformity.

Furthermore a generally restrictive frustoconical transfer passage extends from the prior art equalization and distribution chamber to the annular outlet in order to minimize the pressure differential in the equalization and distribution chamber. This prior art restrictive transfer passage results in a requirement for a substantially higher melt pressure compared to the present embodiment which relies upon at least one convolution formed by a channel or by the combined length of two or more channels of decreasing cross section opening into the gradual increasing thickness of the frustoconical passage 64 to minimize circumferential pressure differentials at the outlet 48. The size of the spiral channel or channels and the thickness of the passage 64 are selected to produce substantially less pressure drop between the inlet 46 and outlet 48 compared to the prior art.

Still further the elimination of the prior art equalization chamber with its opening into a restrictive frustoconical transfer passage reduces shear on the plastic polymer that is produced by such opening. Substantially less shear results from the present gradual opening of the spiral channel or channels through one or more spiral convolutions in the frustoconical passage 64. This results in increased strength in the article being produced.

Circumferential polymer extrusion temperatures tend to be more uniform in extrusion heads according to the invention, and substantially more uniform in the embodiments having two or more spiral distribution channel convolutions. As discussed earlier, since polymer melt in the prior art flows from the inlet side of the equalization and distribution chamber to the opposite side, a temperature differential can be produced where the inlet polymer melt temperature differs from the average temperature of the distribution module. As a result, the actual and latent internal stresses discussed above occur. However, in extrusion heads according to this invention all portions of the polymer material flowing from the inlet to the annular extrusion channel are exposed to substantially the same process conditions, e.g., temperature, pressure, shear, etc., along the channel means from the inlet to the annular extrusion channel. Therefore, all of the polymer arriving at the annular extrusion channel has substantially the same process history, that is a substantally identical prior exposure to such process conditions, and is therefore substantially uniform in its properties around the periphery of the extrusion channel as it is extruded therefrom. Thus, the tendency for circumferential temperature differentials and the occurrence of non-homogeneities are reduced.

Reducing the occurrences of non-homogeneities allows one to produce parisons and bottles which are believed to be superior to those in the art. As indicated earlier, reducing non-homogenous distribution of resin which result from pressure and temperature differentials, as well as other processing differentials, reduces the number of actual and latent internal stresses in any parison, bottle or like article prepared from the resin. Accordingly, the resulting bottle or like article will possess superior ability to maintain its integrity under external stresses.

The term "properties" as used herein refer to those properties which are the result of process conditions applied to the resin during the flow from the inlet to the outlet. These include such parameters as process temperatures, pressures, shear conditions and other process conditions to which the polymer is exposed along the path of flow from the inlet to the annular extrusion outlet. The flow path is arranged symmetrically around the periphery of the axis of the module(s) so that all of the polymer is exposed to substantially the same process conditions during its flow from the inlet to the extrusion outlet, with the result that it arrives at the extrusion outlet with substantially symmetrical and homogenous properties around the full periphery of the extrusion outlet.

The present embodiment also provides greater temperature isolation between adjacent modules with a relatively simple and inexpensive structure. The prior art included abutting collars for spacing modules, but the collars had substantial thickness to transfer heat between modules. The present embodiment by including frustoconical air spaces 90 provides improved temperature isolation between extrusion modules.

Still further, the die output structure with section 144 reducing the annular extrusion channel diameter followed by the section 146 of uniform diameter and then the section 148 producing an increase in diameter to the desired container or parison diameter, results in improved product by eliminating prior art tendencies for failure of multiple layers to adhere uniformly together.

While the described embodiment is directed to manufacture of parisons used for blow molding bottles, the disclosed modular extrusion head is suitable for the manufacture of many other tubular articles such as film which is formed by slitting a tubular form with or without blowing of the tubular form; pipe or other elongated profile article which may or may not be filled with foam such as through bore 152; glass mat reinforced sheet wherein polymer is extruded from one or more annular extrusion heads with rectangular center bores onto a glass fiber mat; pultruded sheet, rod or profile article; and wire coatings. For certain applications such as forming wire coatings or extruding coatings on other elongated materials, the extrusion head does not include a mandrel; rather the object on which the coatings are being extruded take the place of the mandrel. The term "container" is used herein to include all of the above described articles.

The container of the present invention is remarkably superior to those formed by prior art methods in that it is relatively free from residual internal stresses otherwise carried forward from the parison by reason of the fact that the polymers of which such prior art parisons were formed were subjected to non-uniform processing conditions in the extrusion head. These non-uniform conditions resulted from the fact that flow paths from the inlets of such prior art extrusion apparatus were non-symmetrical in flow patterns from the inlets to the annular extrusion channel. In the apparatus and method of the present invention, such flow paths extend symmetrically about the axis of each module such that all of the polymer flowing from the inlet to the extrusion channel is subjected to substantially the same process conditions, whereby the properties of the polymer are substantially the same and homogeneous around the full periphery of the annular extrusion channel at the point of extrusion from the channel.

The parison thus formed is therefore substantially free from residual internal stresses that would otherwise occur as a result of such non-uniformities and non-homogeneities. The same advantages are realized whether the container is formed from a single layer or from a plurality of layers in accordance with the present invention. In either case, the finished container is substantially free from residual internal stresses which would otherwise be present from the formation of the parison. It is thus believed that the finished container of this invention can be effectively and safely reused or reclaimed.

## Claims

1. A polymer resin extrusion head (10) for extruding multilayer containers (312) comprising a plurality of coaxial annular extrusion modules (14...20); means (100,102,104) for holding the modules (14...20) spaced longitudinally along an axis (22) of the modules (14...20), and characterized by:
each module having a pair of mating coaxial annular members (40,42), and means (98) securing the pair of mating annular members (40,42) together, and the pair of mating annular members (40,42) defining a resin inlet (46) on the periphery of the module (14...20), a coaxial bore having an inner cylindrical surface (63), an annular extrusion outlet (48) opening into the cylindrical surface (63);
each of said module of modules (14...20) having channel means for receiving and distributing polymer resin extending from the inlet (46) to the extrusion outlet (48) and defining a flow path for the polymer resin to flow from the inlet (46) to the annular extrusion outlet (48) through which the polymer resin is extruded in annular form, said channel means extending symmetrically around the longitudinal axis (22) of said extrusion module of modules (14...20) in a manner so as to subject all of the polymer flowing from said inlet (46) to said extrusion outlet (48) to substantially the same process conditions along said flow path whereby the polymer is distributed at the annular extrusion outlet (48) with properties which are substantially symmetrical around the axis (22) for all resin distributed through said outlet;
each module (14...20) further having a center portion which is frustoconical wherein the frustoconical center portion at the center bore has a dimension (82) along the axis (22) which is greater than the axial dimension (86) of the outer portions of each module (14...20) so that the apex of each preceding module (14...20) engages the succeeding adjacent module (14...20) to form air spaces (91) including frustoconical air space portions (88) between adjacent modules (14...20) to produce enhanced temperature isolation between modules (14...20).

2. A polymer resin extrusion head as defined in claim 1 wherein the channel means includes one or more spiral flow paths (50,51) in the annular extrusion module or modules (14...20) wherein the one or more flow paths substantially circumscribes the axis (22) and which gradually opens into an annular frustoconical space to distribute the resin into the outlet (48).

3. A polymer resin extrusion head as defined in claim 1 wherein the channel means comprises two spiral flow paths (50,51), each path originating from said inlet (46) and each path (50,51) extending in an opposite direction for at least 180° around the axis (22) so that the axis (22) is substantially circumscribed by the two paths (50,51).

4. A polymer resin extrusion head as defined in claim 3 wherein each of the two spiral paths (50,51) substantially circumscribes the axis (22) of the extrusion module or modules (14...20) so that one path (50,51) is substantially concentric with the other path (50,51).

5. A polymer resin extrusion head as defined in any one of claims 1-4 wherein the channel means has a cross-section which decreases from the inlet (46) to the outlet (48) and the channel means gradually opens into an annular frustoconical space (64) which opens into the outlet (48).

6. A polymer resin extrusion head as defined in claim 5 wherein the annular frustoconical space (64) increases in thickness as the space opens into the outlet.

7. A polymer resin extrusion head as defined in claim 5 wherein the pair of mating members (40,42) include inner and outer nested frustoconical portions (54,56) respectively, with the annular extrusion outlet (48) defined by an annular space between the frustoconical portions (54,56), and the inner frustoconical portion (54) having an inside surface (78) with a greater angle from the axis than the angle of an outside surface (76) of the outer frustoconical portion (56).

8. A polymer resin extrusion head as defined in claim 7 wherein the frustoconical space (64) between the frustoconical portions (54,56) is initially determined by a reduction in diameter of the inner frustoconical portion (54) downstream from a first convolution of the spiral channel, and the increasing thickness of the frustoconical space is formed by a frustoconical surface portion (61) on the inside of the outer frustoconical portion (56) having a slant angle less than a slant angle of the surface (69) of the inner frustoconical portion over the region of the spiral path.

9. A polymer resin extrusion head as defined in claim 7, including the plurality of coaxial annular extrusion modules (14...20) spaced longitudinally along a mandrel (34) and extending around successive sections of a mandrel (34) so as to define a tubular extrusion channel (36) between the modules (14...20) and the mandrel (34) for receiving successive layers extruded by the modules (14...20) into the tubular extrusion channel; an annular die (128,130) mounted downstream from the extrusion modules (14...20) and having three successive sections (144,146,148) for receiving and forming the multilayered tubular extrusion from extrusion channel, the first section (144) having a tapered diameter progressively reduced from the diameter of the annular extrusion channel, the second section having a constant diameter (146) equal to the exit diameter of the first section throughout its length, and the third section (148) having a flared diameter progressively increasing the diameter from the diameter of the second section to a desired diameter.

## Patentansprüche

1. Extruderkopf (10) für polymere Kunststoffe zum Extrudieren von Mehrschicht-Behältern (312), mit einer Vielzahl von koaxialen ringförmigen Extruder-Modulen (14...20) und mit Mitteln (100,102,104), um die Module (14...20) longitudinal entlang einer Achse (22) der Module (14...20) auf Abstand zu halten, gekennzeichnet durch:
jeder Modul hat ein Paar von zusammenpassenden koaxialen ringförmigen Teilen (40,42) sowie Mittel (98), die das Paar von zusammenpassenden ringförmigen Teilen (40,42) zueinander sichern, wobei das Paar der zusammenpassenden ringförmigen Teile (40,42) einen Kunststoff-Eingang (46) an der Peripherie der Module (14...20), eine koaxiale Bohrung mit einer inneren zylindrischen Oberfläche (63) und einen sich in die zylindrische Fläche (63) öffnenden ringförmigen Extrusionsausgang (48) vorgibt;
jeder der Module (14...20) besitzt Kanalmittel zum Empfangen und Verteilen eines polymeren Kunststoffes, der sich von dem Eingang (46) zu dem Extrusionsausgang (48) erstreckt und die einen Flußweg für den polymeren Kunststoff vorgeben, damit dieser von dem Eingang (46) zu dem ringförmigen Extrusionsausgang (48) fließt, durch den der polymere Kunststoff in ringförmiger Gestalt extrudiert wird, wobei diese Kanalmittel sich symmetrisch um die Längsachse (22) jedes der Extrudermodule (14...20) erstrecken, derart, daß auf den gesamten Kunststoff, der von dem Eingang (46) zu dem Extrusionsausgang (48) fließt, im wesentlichen dieselben Prozeßbedingungen entlang des Flußweges ausgeübt werden, wobei der polymere Kunststoff an dem ringförmigen Extrusionsausgang (48) mit Eigenschaften ausgetragen wird, die im wesentlichen symmetrisch um die Achse (22) für den gesamten Kunststoff ist, der durch den Ausgang ausgetragen wird;
jeder Modul (14...20) besitzt ferner einen zentralen, kegelstumpfartig ausgebildeten Teil, wobei der kegelstumpfförmige zentrale Teil an der zentralen Durchgangsbohrung eine Abmessung (82) entlang der Achse (22) hat, die größer als die axiale Abmessung (86) der äußeren Teile jedes der Module (14...20) ist, so daß der Scheitel jedes vorausgehenden Moduls (14...20) mit dem nachfolgenden, benachbarten Modul in Eingriff kommt, um so Lufträume (91) einschließlich kegelstumpfförmiger Luftraumabschnitte (88) zwischen benachbarten Modulen (14...20) auszubilden, um so eine verbesserte Temperaturisolation zwischen den Modulen (14...20) herzustellen.

2. Extruderkopf für polymere Kunststoffe nach Anspruch 1, dadurch gekennzeichnet, daß die Kanalmittel einen oder mehrere spiralförmige Flußpfade (50,51) in dem ringförmigen Extrudermodul bzw. den Extrudermodulen (14...20) einschließen, wobei der eine oder die mehreren Flußpfade im wesentlichen die Achse (22) umreißen und die sich stufenweise in einen ringförmigen, kegelförmigen Raum öffnen, um den Kunststoff in den Ausgang (48) auszutragen.

3. Extruderkopf für polymere Kunststoffe nach Anspruch 1, dadurch gekennzeichnet, daß die Kanalmittel zwei spiralförmige Flußpfade (50,51) aufweisen, wobei jeder Pfad von dem Eingang (46) ausgeht und jeder Pfad (50,51) sich um mindestens einen Winkel von 180° um die Achse (22) in eine entgegengesetzte Richtung erstreckt, so daß die Achse (22) im wesentlichen durch die zwei Pfade (50,51) umrissen ist.

4. Extruderkopf für polymere Kunststoffe nach Anspruch 3, dadurch gekennzeichnet, daß jeder der beiden Spiralpfade (50,51) im wesentlichen die Achse (22) des Extrudermoduls oder der Module (14...20) abgrenzt, so daß der eine Pfad (50,51) im wesentlichen konzentrisch zu dem anderen Pfad (50,51) ist.

5. Extruderkopf nach einem der Ansprüche 1-4, dadurch gekennzeichnet, daß die Kanalmittel einen Querschnitt aufweisen, der von dem Eingang (46) hin zu dem Ausgang (48) abnimmt, und daß die Kanalmittel sich absatzweise in einen ringförmigen kegelstumpfförmigen Raum (64) öffnen, der sich seinerseits in den Ausgang (48) öffnet.

6. Extruderkopf für polymere Kunststoffe nach Anspruch 5, dadurch gekennzeichnet, daß der ringförmige kegelstumpfförmige Raum (64) in dem Maße an Dicke zunimmt, wie sich der Raum in den Ausgang öffnet.

7. Extruderkopf für polymere Kunststoffe nach Anspruch 5, dadurch gekennzeichnet, daß das Paar von zusammenpassenden Teilen (40,42) innere bzw. äußere verschachtelte kegelstumpfförmige Teile (54,56) aufweist, wobei der ringförmige Extrusionsausgang (48) durch einen ringförmigen Raum zwischen den kegelstumpfförmigen Teilen (54,46) vorgegeben ist, und wobei der innere kegelstumpfförmige Teil (54) eine Innenfläche (78) besitzt, die einen größeren Winkel gegenüber der Achse als der Winkel einer äußeren Fläche (76) des äußeren kegelstumpfförmigen Teils (56) hat.

8. Extruderkopf für polymere Kunststoffe nach Anspruch 7, dadurch gekennzeichnet, daß der kegelstumpfförmige Raum (64) zwischen den kegelstumpfförmigen Teilen (54,56) anfänglich durch eine Verminderung des Durchmessers des inneren kegelstumpfförmigen Teils (54) bestimmt ist, sowie stromabwärts von einer ersten Windung des spiralförmigen Kanals, wobei die ansteigende Dicke des kegelstumpfförmigen Raumes durch einen kegelstumpfförmigen Flächenabschnitt (61) an der Innenseite des äußeren kegelstumpfförmigen Teiles (56) ausgebildet ist, die einen Abschrägungswinkel besitzt, der kleiner ist als der Abschrägungswinkel der Oberfläche (69) des inneren kegelstumpfförmigen Teils über den gesamten Bereich des spiralförmigen Pfades.

9. Extruderkopf für polymere Kunststoffe nach Anspruch 7, dadurch gekennzeichnet, daß eine Vielzahl von koaxialen ringförmigen Extrudermodulen (14...20) vorgesehen sind, die longitudinal entlang eines Dornes (34) beabstandet angeordnet sind, und die sich um aufeinanderfolgende Sektionen des Dornes (34) erstrecken, um so einen röhrenförmigen Extruderkanal (36) zwischen den Modulen (14...20) und dem Dorn (34) zu definieren, der aufeinanderfolgende Schichten empfängt, die durch die Module (14...20) in den rohrförmigen Extrusionskanal extrudiert werden, und daß ein ringförmiges Werkzeug bzw. Mundstück (128,130) vorgesehen ist, das stromab der Extrudermodule (14...20) angeordnet ist, und das drei aufeinanderfolgende Sektionen (144,146,148) für das Aufnehmen und Formen der mehrschichtigen röhrenförmigen Extrusion des Extruderkanals besitzt, wobei die erste Sektion (144) einen abnehmenden Durchmesser besitzt, der sich progressiv von dem Durchmesser des ringförmigen Extruderkanals aus reduziert, wobei die zweite Sektion einen konstanten Durchmesser (146) besitzt, der gleich dem Ausgangsdurchmesser der ersten Sektion über seine Länge ist, und wobei die dritte Sektion einen sich nach außen erweiternden Durchmesser besitzt, der von dem Durchmesser der zweiten Sektion auf einen gewünschten Durchmesser ansteigt.

## Revendications

1. Tête (10) d'extrusion de résine polymère servant à extruder des récipients multi-couche (312), comprenant une pluralité de modules d'extrusion (14 ... 20), annulaires et coaxiaux, des moyens (100, 102, 104) pour maintenir les modules (14 ... 20) espacés dans le sens longitudinal le long d'un axe (22) des modules (14 ... 20), caractérisée par le fait que :
- chaque module comprend une paire d'éléments annulaires (40, 42), coaxiaux et s'appariant, et un moyen (98) qui solidarise l'un de l'autre lesdits éléments annulaires s'appariant (40, 42), ladite paire d'éléments annulaires s'appariant (40, 42) définissant une entrée de résine (46) sur la périphérie du module (14 ... 20), un conduit coaxial comportant une surface intérieure (63) cylindrique et une sortie d'extrusion (48) annulaire, débouchant dans la surface cylindrique (63),
- chacun desdits modules (14 ... 20) comportant un moyen formant canal qui reçoit et distribue une résine polymère, s'étendant de l'entrée (46) à la sortie d'extrusion (48) et définissant un passage d'écoulement pour que la résine polymère s'écoule de l'entrée (46) à la sortie d'extrusion annulaire (48) par laquelle la résine polymère est extrudée sous forme annulaire, ledit moyen formant canal s'étendant de manière symétrique autour de l'axe longitudinal (22) dudit module d'extrusion (14 ... 20) de manière à soumettre tout le polymère qui s'écoule de ladite entrée (46) à ladite sortie d'extrusion (48) à des conditions de traitement sensiblement les mêmes le long dudit passage d'écoulement, si bien que le polymère est distribué au niveau de la sortie d'extrusion annulaire (48) avec des caractéristiques qui sont sensiblement symétriques autour de l'axe (22) pour toute la résine distribuée par ladite sortie,
- chaque module (14 ..; 20) comportant en outre une partie centrale qui est tronconique, ladite partie centrale tronconique ayant au niveau du conduit central une dimension (82) suivant l'axe (22) qui est supérieure à la dimension axiale (86) des parties extérieures de chaque module (14 ... 20), de sorte que le sommet de chaque module précédent (14 ... 20) se met en prise avec le module adjacent qui suit (14 ... 20) pour former des intervalles d'air (91) comprenant des parties d'intervalle d'air tronconiques (88) entre modules adjacents (14 ... 20) pour donner une isolation thermique renforcée entre modules (14 ... 20).

2. Tête d'extrusion de résine polymère selon la revendication 1, dans laquelle le moyen formant canal comprend un ou plusieurs passages d'écoulement en spirale (50, 51) dans le ou les module(s) annulaire(s) d'extrusion (14 ... 20), le ou les passages d'écoulement entourant sensiblement l'axe (22) et débouchant progressivement dans un espace annulaire tronconique pour distribuer la résine dans la sortie (48).

3. Tête d'extrusion de résine polymère selon la revendication 1, dans laquelle le moyen formant canal comprend deux passages d'écoulement en spirale (50, 51), chaque passage partant de ladite entrée (46) et chaque passage (50, 51) s'étendant en direction opposée sur au moins 180° autour de l'axe (22), de sorte que l'axe (22) est sensiblement entouré par les deux passages (50, 51).

4. Tête d'extrusion de résine polymère selon la revendication 3, dans laquelle chacun des deux passages en spirale (50, 51) entoure sensiblement l'axe (22) du ou des module(s) d'extrusion (14 ... 20), si bien qu'un premier passage (50, 51) est sensiblement concentrique à l'autre passage (50, 51).

5. Tête d'extrusion de résine polymère selon l'une quelconque des revendications 1 à 4, dans laquelle le moyen formant canal a une section qui diminue de l'entrée (46) à la sortie (48), et le moyen formant canal débouche progressivement dans un espace annulaire tronconique (64) qui débouche dans la sortie (48).

6. Tête d'extrusion de résine polymère selon la revendication 5, dans laquelle l'espace annulaire tronconique (64) a une épaisseur qui augmente à mesure que l'espace débouche dans la sortie.

7. Tête d'extrusion de résine polymère selon la revendication 5, dans laquelle la paire d'éléments s'appariant (40, 42) comprend des parties tronconiques (54, 56) respectivement intérieure et extérieure, emboîtées, la sortie d'extrusion annulaire (48) étant définie par un espace annulaire entre les parties tronconiques (54, 56) et la partie tronconique intérieure (54) ayant une surface intérieure (78) qui fait par rapport à l'axe un angle plus grand que l'angle que fait la surface extérieure (76) de la partie tronconique extérieure (56).

8. Tête d'extrusion de résine polymère selon la revendication 7, dans laquelle l'espace tronconique (64) compris entre les parties tronconiques (54, 56) est initialement déterminé par une réduction de diamètre de la partie tronconique intérieure (54) en aval d'une première convolution du canal en spirale, et l'épaisseur croissante de l'espace tronconique est obtenue grâce à une partie (61) de surface tronconique sur l'intérieur de la partie tronconique extérieure (56) qui a un angle d'inclinaison inférieur à l'angle d'inclinaison de la surface (69) de la partie tronconique intérieure sur la région du passage en spirale.

9. Tête d'extrusion de résine polymère selon la revendication 7, comprenant la pluralité de modules d'extrusion (14 ... 20) annulaires et coaxiaux, espacés dans le sens longitudinal le long d'un mandrin (34) et s'étendant autour de tronçons successifs du mandrin (34) de manière à définir un canal d'extrusion (36), annulaire, entre les modules (14 ... 20) et le mandrin (34) pour recevoir des couches successives extrudées par les modules (14 ... 20) dans le canal d'extrusion tubulaire, une filière annulaire (128, 130) montée en aval des modules d'extrusion (14 ... 20) et comprenant trois tronçons successifs (144, 146, 148) pour recevoir et former l'extrusion tubulaire multi-couche à partir du canal d'extrusion, le premier tronçon (144) ayant un diamètre rétréci qui diminue progressivement depuis le diamètre du canal d'extrusion annulaire, le deuxième tronçon ayant sur toute sa longueur un diamètre constant (146) égal au diamètre de sortie du premier tronçon et le troisième tronçon (148) ayant un diamètre évasé qui augmente progressivement du diamètre dudit deuxième tronçon jusqu'à un diamètre désiré.
